(19) **Europäisches Patentamt**

**European Patent Office**

**Office européen des brevets**

(11) **EP 1 034 443 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **98963507.3**

(22) Anmeldetag: **24.11.1998**

(51) Int Cl.$^7$: **G01T 1/29**, H04N 1/031

(86) Internationale Anmeldenummer:
**PCT/EP98/07570**

(87) Internationale Veröffentlichungsnummer:
**WO 99/028765 (10.06.1999 Gazette 1999/23)**

(54) **VORRICHTUNG ZUM AUSLESEN VON EINER IN EINEM PHOSPHORTRÄGER ABGESPEICHERTEN INFORMATION UND RÖNTGENKASSETTE**

DEVICE FOR READING OUT INFORMATION STORED IN A PHOSPHOR-CARRIER, AND AN X-RAY CASSETTE

DISPOSITIF POUR LA LECTURE D'UNE INFORMATION STOCKEE DANS UN SUPPORT AU PHOSPHORE, ET COFFRET DE RADIOGRAPHIE

(84) Benannte Vertragsstaaten:
**DE ES FR GB IT**

(30) Priorität: **28.11.1997 DE 19752925**

(43) Veröffentlichungstag der Anmeldung:
**13.09.2000 Patentblatt 2000/37**

(73) Patentinhaber: **Agfa-Gevaert AG**
**51373 Leverkusen (DE)**

(72) Erfinder:
• **MÜLLER, Jürgen**
**D-81545 München (DE)**
• **GEBELE, Herbert**
**D-82054 Sauerlach (DE)**
• **ZEHETMAIER, Thomas**
**D-85646 Neufarn (DE)**
• **THOMA, Ralph**
**D-86167 Augsburg (DE)**

(56) Entgegenhaltungen:
**US-A- 4 816 679      US-A- 4 922 103**
**US-A- 5 038 037**

**Beschreibung**

Die vorliegende Erfindung betrifft eine Vorrichtung zum Auslesen von einer in einem Phosphorträger abgespeicherten Information gemäß dem Oberbegriff des Anspruchs 1 und eine Röntgenkassette.

Insbesondere für medizinische Zwecke wird von einem Objekt, beispielsweise einem Patienten, mittels einer Röntgenstrahlung ein Bild erzeugt, das in einem Phosphorträger als latentes Bild abgespeichert wird. Zum Auslesen des in dem Phosphorträger abgespeicherten Röntgenstrahlenbildes wird der Phosphorträger mittels einer Strahlungsquelle angeregt. Er emittiert aufgrund dieser Anregung Licht, das eine Intensität entsprechend des in dem Phosphorträger abgespeicherten Röntgenstrahlungsbildes aufweist. Das von dem Phosphorträger ausgesandte Licht wird von einem Detektionsmittel empfangen, so daß das in dem Phosphorträger abgespeicherte Röntgenstrahlungsbild anschließend sichtbar gemacht werden kann. Das Röntgenstrahlungsbild kann beispielsweise direkt auf einem Monitor dargestellt werden. Es ist aber auch möglich, das Röntgenstrahlungsbild auf einen speziell für Röntgenbilder hergestellten fotografischen Röntgenfilm zu schreiben.

Aus der europäischen Patentanmeldung EP 0 777 148 A1 ist eine Anordnung zum Auslesen von in einem Phosphorträger gespeicherten Informationen bekannt. Bei dieser bekannten Anordnung wird der Phosphorträger mit einem Laserstrahl angeregt. Der Laserstrahl eines einzigen Lasers wird dabei über einen sehr schnell drehenden Polygonspiegel und mehrere optische Linsen auf den Phosphorträger gerichtet. Die in der Patentanmeldung beschriebene Anordnung ist eine sogenannte "Flying Spot"-Vorrichtung, bei der der von dem Polygonspiegel reflektierte Laserstrahl alle Punkte einer Zeile des Phosphorträgers nacheinander anregt. Das aufgrund der Anregung mittels des Laserstrahls von dem Phosphorträger emittierte Licht wird von einem Faserquerschnittswandler zu einem fotoelektrischen Sensor geführt, der die aufgesammelten Photonen in elektrische Signale wandelt.

Mit dieser Anordnung wird nur jeweils ein einziger Punkt des Phosphorträgers zum Aussenden von Licht angeregt. Um die gesamte, in dem Phosphorträger abgespeicherte Information in einer vertretbaren, d.h. möglichst kurzen Zeit auslesen zu können, dürfen die einzelnen Punkte des Phosphorträgers nur kurzzeitig angeregt werden. Bei "Flying Spot"-Systemen beträgt eine typische Anregungszeit für einen Punkt etwa 6μs. Aufgrund dieser kurzen Anregungszeit muß die Intensität der von dem Laser erzeugten Laserstrahlung sehr groß sein, damit die einzelnen Punkte des Phosphorträgers eine genügend große Strahlung aussenden können. Des weiteren kann nur eine relativ geringe Menge abgespeicherter Information ausgelesen werden. Dadurch ist die erreichbare Qualität bei der Wiedergabe der abgespeicherten Information eingeschränkt.

Der den Phosphor anregende Laserstrahl muß gewissen Bedingungen bezüglich seiner räumlichen und spektralen Verteilung genügen. Um vor allem die gesamte Breite des Phosphorträgers anregen zu können, erfordern solche "Flying Spot"-Systeme eine Laserstrahlführung mit einer ca. 1,5- bis 2fachen Länge der Breite der anzuregenden Zeile des Phosphorträgers. Die Fokussierung und Führung des Laserstrahls erfordert ein sehr aufwendiges und damit kostenintensives System von optischen Komponenten. Diese optischen Komponenten benötigen des weiteren sehr viel Raum, so daß die Geräteabmessungen eines solchen "Flying Spot"-Systems sehr groß sind.

Aus den Patentschriften US 5,038,037 und US 4,922,103 sind Vorrichtungen zum Auslesen von in einem Phosphorträger abgespeicherten Informationen bekannt, bei welchen der Phosphorträger mit dem Licht von in einer Zeile angeordneten Leuchtdioden oder Festkörperlaser angeregt wird. Das von dem Phosphorträger ausgesandte Emissionslicht wird von in einer Zeile angeordneten photoelektrischen Wandlerelementen empfangen. Bei diesen Vorrichtungen würde ein Ausfall einer der Leuchtdioden bzw. Festkörperlaser dazu führen, daß der entsprechende Bildbereich auf dem Phosphorträger nicht ausgelesen werden kann.

Der vorliegenden Erfindung liegt die Aufgabe zugrunde, eine hohe Sicherheit beim Auslesen einer in einem Phosphorträger abgespeicherten Information zu gewährleisten.

Diese Aufgabe wird durch die technische Lehre des Anspruchs 1 oder des Anspruchs 7 gelöst.

Die erfindungsgemäße Vorrichtung ist dadurch gekennzeichnet, dass die Strahlungsquelle eine Optik zum Aufweiten der mehreren Einzelstrahlen in Ausbreitungsrichtung einer Zeile des Phosphorträgers aufweist, wobei sich mindestens zwei der Einzelstrahlen zumindest teilweise auf anzuregenden Punkten des Phosphorträgers überlagern. Hierdurch wird die Auslesesicherheit für den Fall eines Ausfalls eines Einzelstrahls erhöht.

Das Empfangsmittel ist hierbei so ausgestaltet, daß es eine Vielzahl von Punktelementen enthält und die von angeregten Punkten des Phosphorträgers ausgesandte zweite Strahlung punktweise gleichzeitig von mehreren dieser Punktelemente empfangen werden kann. Zum Anregen der einzelnen Punkte des Phosphorträgers, so daß diese die zweite Strahlung aussenden, ist eine vorgegebene Mindestenergie E notwendig. Diese ist abhängig von der Leistung (Intensität) der Strahlungsquelle und der Verweilzeit der von der Strahlungsquelle ausgesandten ersten Strahlung auf dem anzuregenden Punkt des Phosphorträgers. Da mehrere Punkte des Phosphorträgers gleichzeitig angeregt werden, ist es möglich, eine relativ lange Verweilzeit der ersten Strahlung je Punkt des Phosphorträgers zu erhalten, ohne die Gesamtdauer, die zum Auslesen der gesamten Information, die in dem Phosphorträger abgespeichert ist, zu verlängern. Vielmehr ist es vorteilhafterweise sogar möglich, diese Gesamtzeit zum Auslesen der gesamten in dem Phosphorträger abgespeicherten Information zu verkürzen. Aufgrund des langen Verweilens auf jeden Punkt der Phosphorplatte kann die Abtastgeschwindigkeit beim Anregen der Punkte der Phosphorplatte niedrig gehalten werden. Jeder Punkt sendet eine große zweite Strahlung aus, die von dem Empfangsmittel detektiert werden kann.

Es ist möglich, die von dem Phosphorträger ausgesandte zweite Strahlung über einen langen Zeitraum aufzuintegrieren. Da jedes Punktelement des Empfangsmittels ein gewisses Eigenrauschen aufweist, kann aufgrund der Erfindung vorteilhafterweise der Störabstand zum Eigenrauschen der Punktelemente vergrößert werden. Aufgrund der längeren Verweildauer der ersten Strahlung der Strahlungsquelle pro Punkt des Phosphorträgers ist es ebenso möglich, die von der Strahlungsquelle aufzubringende Leistung (Intensität) zu reduzieren und trotzdem die für das Anregen des Phosphorträgers erforderliche Energie E aufzubringen.

In einer vorteilhaften Ausgestaltung der Erfindung ist es möglich mehrere, insbesondere alle Punkte, die in einer Zeile des Phosphorträgers angeordnet sind, gleichzeitig anzuregen. Dadurch ist es möglich, eine große Anzahl von Punkten des Phosphorträgers gleichzeitig anzuregen und gleichzeitig dennoch die Aufwendungen für die Ausgestaltung der Strahlungsquelle und des Empfangsmittels vergleichsweise klein zu halten. Die notwendige Anzahl von Komponenten in der Strahlungsquelle und dem Empfangsmittel kann daher begrenzt bleiben. Dadurch kann eine hohe Kompaktheit der Anordnung gewährleistet werden.

Mittels der Strahlungsquelle können vorteilhafterweise mehrere Einzelstrahlen erzeugt werden, wodurch das gleichzeitige Anregen mehrerer Punkte des Phosphorträgers auf einfache und effektive Weise sehr genau durchgeführt werden kann.

Vorteilhafterweise weist die Strahlungsquelle mehrere Laserdioden auf, die für die Anregung der mehreren Punkte des Phosphorträgers verwendet werden. Mit Laserdioden lassen sich für die Anregung der Punkte des Phosphorträgers genügend hohe Strahlungsleistungen erzeugen. Gleichzeitig sind sie sehr kompakt, so daß ihre Verwendung für einen Aufbau der erfindungsgemäßen Vorrichtung mit geringen Abmaßen förderlich ist. Darüber hinaus können Laserdioden einfach angesteuert und geregelt werden.

In einer besonders vorteilhaften Ausgestaltung der Erfindung ist die Anzahl der Laserdioden der Strahlungsquelle gleich der Anzahl der Punktelemente des Empfangsmittels. Jeder Punkt einer anzuregenden Zeile des Phosphorträgers wird in diesem Fall gleichzeitig angeregt. Die Strahlungsquelle ist dann als Laserdiodenzeile ausgestaltet. Dadurch ist es vorteilhafterweise möglich, auf weitere optische Mittel zur Aufweitung und Fokussierung der Laserdiodenstrahlen zu verzichten. Der Abstand zwischen der Strahlungsquelle und dem anzuregenden Phosphorträger kann gering gehalten werden. Dadurch wird weiterhin der Kompaktheitsgrad der Anordnung gefördert.

Um mehrere Punkte des Phosphorträgers mit einem einzigen Einzelstrahl anregen zu können, kann die Strahlungsquelle eine Optik enthalten, mit der der Einzelstrahl in Ausbreitungsrichtung einer Zeile des Phosphorträgers aufgeweitet werden kann. Dadurch ist es vorteilhafterweise ebenfalls möglich, mehrere Einzelstrahlen, insbesondere zwei Einzelstrahlen, zumindest teilweise auf dem jeweils anzuregenden Punkt des Phosphorträgers zu überlagern. Durch diese Überlagerung der Intensitäten mehrerer Einzelstrahlen kann die von der Strahlungsquelle zu erbringende Anregungsleistung verringert werden. Darüber hinaus wird ebenfalls die Auslesesicherheit für den Fall eines Ausfallens eines Einzelstrahles erhöht. Um die Einzelstrahlen trotz der Aufweitung in Ausbreitungsrichtung einer Zeile möglichst auf diese Zeile zu beschränken, ist die in der Strahlungsquelle vorgesehene Optik vorteilhafterweise so ausgestaltet, daß sie die Einzelstrahlen in einer Richtung senkrecht zu der Ausbreitungsrichtung der Zeile fokussiert. Dadurch wird gewährleistet, daß ein unerwünschtes Anregen von Zeilen, die der augenblicklich abzutastenden Zeile benachbart sind, vermieden wird.

Zwischen dem Phosphorträger und dem Empfangsmittel kann ein Abbildungsmittel vorgesehen sein, mit dem die von den einzelnen angeregten Punkten des Phosphorträgers ausgesandte zweite Strahlung auf den einzelnen Punktelementen des Empfangsmittels abgebildet werden kann. Diese Abbildung erfolgt vorteilhafterweise in einem 1 : 1-Maßstab. Dadurch kann auf die Verwendung eines Faserquerschnittswandlers verzichtet werden, der unvorteilhaft große Abmessungen besitzt. Der Abstand zwischen Phosphorträger und Empfangsmittel wird dadurch sehr gering, wodurch der Kompaktheitsgrad der Anordnung stark verbessert werden kann.

In einer weiteren besonders vorteilhaften Ausgestaltung der Erfindung sind zwei Strahlungsquellen vorgesehen, denen jeweils ein Empfangsmittel zugeordnet ist. Die beiden Strahlungsquellen und ihre zugehörigen Empfangsmittel sind dabei so angeordnet, daß der Phosphorträger, der als Phosphorplatte mit einer Oberseite und einer Unterseite ist, beidseitig auslesbar ist. Dadurch kann die Menge der von dem Phosphorträger auszusendenden zweiten Strahlung weiter erhöht werden, wodurch sich die Qualität der Wiedergabe der aus der Phosphorplatte ausgelesenen Information verbessert.

Erfindungsgemäß wird eine Vorrichtung zum Auslesen von einer in einem Phosphorträger abgespeicherten Information direkt in einer Röntgenkassette angebracht, die einen solchen Phosphorträger aufweist. Eine in dem Phosphorträger abgespeicherte Röntgeninformation kann daher direkt von der erfindungsgemäßen Vorrichtung ausgelesen und einer Steuereinrichtung zur weiteren Verarbeitung zugeführt werden. Eine solche Röntgenkassette kann vorteilhafterweise fest in einem Röntgengerät integriert sein. Dadurch ist es für das Bedienpersonal vorteilhafterweise nicht mehr notwendig, zum Auslesen der in dem Phosphorträger abgespeicherten Information, die Röntgenkassette aus dem Röntgengerät herausnehmen zu müssen, um sie in ein spezielles Lesegerät zum Auslesen der abgespeicherten Information hineinzuschieben. Der Bedienkomfort wird dadurch stark verbessert.

In einer vorteilhaften Ausgestaltung der erfindungsgemäßen Röntgenkassette ist der Phosphorträger als Phosphorplatte ausgestaltet, die eine Ober- und eine Unterseite aufweist, die von einander verschiedene Beschichtungen haben. Diese beiden unterschiedlichen Beschichtungen weisen unterschiedliche Empfindlichkeiten auf. Durch die Beschichtung der einen Seite der Phosphorplatte können beispielsweise Knochen besser aufgezeichnet werden, und durch die Beschichtung der anderen Seite der Phosphorplatte beispielsweise Weichteile. Die Bedienperson hat aufgrund dieser Ausgestaltung der erfindungsgemäßen Röntgenkassette die Auswahl zwischen zwei Empfindlichkeiten. Dadurch kann die Flexibilität und Leistungsfähigkeit der erfindungsgemäßen Vorrichtung weiter erhöht werden.

Weitere vorteilhafte Ausgestaltungen der Erfindung können den abhängigen Patentansprüchen entnommen werden.

Im folgenden werden die Erfindung und ihre Vorteile anhand von Ausführungsbeispielen und den Zeichnungen beschrieben.

Es zeigen:

Fig. 1     ein erstes Ausführungsbeispiel einer erfindungsgemäßen Vorrichtung zum Auslesen von in einem Phosphorträger abgespeicherter Information in Form eines Lesekopfes,

Fig. 2     eine weitere Ansicht des ersten Ausführungsbeispiels der erfindungsgemäßen Lesekopfes,

Fig. 3     ein Beispiel einer schematische Darstellung einer Einteilung einer Phosphorplatte in Zeilen und Punkte,

Fig. 4     ein zweites Ausführungsbeispiel der erfindungsgemäßen Vorrichtung,

Fig. 5     ein drittes Ausführungsbeispiel der erfindungsgemäßen Vorrichtung,

Fig. 6     ein viertes Ausführungsbeispiel der erfindungsgemäßen Vorrichtung mit zwei Leseköpfen und

Fig. 7     ein Ausführungsbeispiel einer erfindungsgemäßen Röntgenkassette.

Im folgenden werden für gleiche und gleichwirkende Elemente der verschiedenen Ausführungsbeispiele durchweg gleiche Bezugszeichen verwendet.

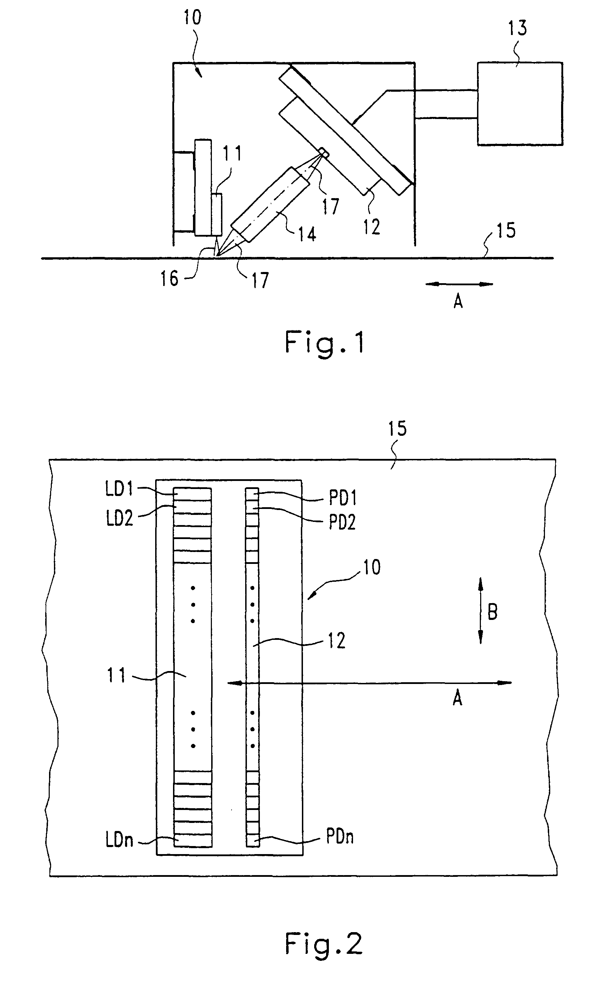

Figur 1 zeigt das erste Ausführungsbeispiel der erfindungsgemäßen Vorrichtung zum Auslesen von einer in einem Phosphorträger abgespeicherten Information. Ein Lesekopf 10 wird dazu verwendet, eine Bildinformation aus einer Phosphorplatte 15 auszulesen. Diese Bildinformation wurde mittels Röntgenbestrahlung in der Phosphorplatte 15 erzeugt. Der Lesekopf 10 weist eine Strahlungsquelle auf, die hier als Laserdiodenzeile 11 ausgestaltet ist. Die Laserdiodenzeile 11 ist senkrecht auf die Phosphorplatte 15 ausgerichtet, so daß die von den einzelnen Laserdioden ausgesandte Strahlung direkt auf die Phosphorplatte trifft. Die Laserdiodenzeile 11 weist eine Vielzahl von nebeneinander angeordneten Laserdioden auf, die im vorliegenden Ausführungsbeispiel die gesamte Breite der rechteckigen Phosphorplatte, in der Information abgespeichert werden kann, anregen kann. Die Laserdiodenzeile enthält hier 4096 parallel in einer Linie nebeneinander angeordnete Laserdioden.

Der Lesekopf 10 enthält des weiteren ein Empfangsmittel, das im vorliegenden Ausführungsbeispiel als "Charge-Coupled-Device"(CCD)-Zeile 12 ausgestaltet ist. Diese CCD-Zeile 12 weist eine Vielzahl von parallel in einer Linie nebeneinander angeordneten Fotodetektoren auf. Mit diesen Fotodetektoren kann eine fotoelektrische Wandlung einer empfangenen Lichtstrahlung durchgeführt werden. Sie stellen die Punktelemente des Empfangsmittels dar. Jeder Fotodetektor kann eine von einem der angeregten Punkte der Phosphorplatte ausgesandte Lichtstrahlung empfangen. Im vorliegenden Ausführungsbeispiel sind daher in der CCD-Zeile 12 4096 einzelne Fotodetektoren vorgesehen.

Zwischen der Phosphorplatte 15 und der CCD-Zeile 12 ist ein Abbildungsmittel mit sogenannten Selfoc-Linsen vorgesehen. Für jeden anregbaren Punkt der Zeile der Phosphorplatte 15 kann eine Selfoc-Linse vorgesehen sein, was allerdings für die Erfindung nicht notwendig ist. Die Selfoc-Linse ist im wesentlichen eine Glasfaser, die einen Gradienten im Brechungsindex zur Mitte hin aufweist. Sie kann aufgrund von einer Totalreflexion weitgehend verlustfrei Licht gebündelt weiterleiten. Jede Selfoc-Linse gewährleistet, daß der Einfallswinkel des Lichts am Eingang der Selfoc-Linse gleich dem Ausfallwinkel des Lichtes am Ausgang ist. Mit einer ein- oder zweidimensionalen Anordnung solcher Selfoc-Linsen kann somit ein dieser Anordnung zugeordneter Abbildungsbereich exakt 1:1 auf einen Bildbereich abgebildet werden. Mittels einer geeigneten Anordnung solcher Selfoc-Linsen ist das von einem der angeregten Punkte der Phosphorplatte 15 ausgesandte Licht auf einfache Weise und sehr genau auf dem zugeordneten Fotodetektor der CCD-Zeile 12 abbildbar. Anstelle der Selfoc-Linse können auch Mikrolinsenarrays verwendet werden.

Die CCD-Zeile 12 ist an ihrem Ausgang mit einer Datenverarbeitungseinrichtung 13 verbunden. Diese Datenverarbeitungseinrichtung 13 hat die Aufgabe, die von der CCD-Zeile 12 erzeugten elektrischen Signale, die ein Abbild der in der Phosphorplatte 15 abgespeicherten Bildinformation enthalten, auszuwerten und aufzubereiten und darüber hinaus die Strahlungsquelle 11, insbesondere deren Vorschub zum zeilenweisen Auslesen der Phosphorplatte 15, zu steuern. Die von der CCD-Zeile 12 erzeugten elektrischen Signale werden in der Datenverarbeitungseinrichtung 13 einer Analog-Digitalwandlung unterzogen. Die so erhaltenen digitalen Bilddaten können anschließend von einem digitalen Signalprozessor mittels zuvor in der Datenverarbeitungseinrichtung 13 abgespeicherten Algorithmen verarbeitet werden. Insbesondere können durch den digitalen Signalprozessor Korrekturwerte berechnet und die einzelnen digitalen Bilddaten der Bildinformation einer Korrekturprozedur unterworfen werden. Dadurch können Kurz- und Langzeitschwankungen einzelner Komponenten des erfindungsgemäßen Lesekopfes 10 oder der Phosphorplatte 15 berücksichtig werden, die ansonsten zu Fehlern und Verzerrungen bei der Wiedergabe der in der Phosphorplatte abgespeicherten Bildinformation führen würden. Solche Kurz- und Langzeitänderungen können beispielsweise Leistungsschwankungen der verwendeten Laserdioden sein, die aufgrund von Temperaturschwankungen oder Alterungserscheinungen auftreten. Es können aber ebenso Ungleichmäßigkeiten in der Röntgenplatte 15 vorhanden sein, die die von der Phosphorplatte 15 ausgesandte Lichtstrahlung verfälschen. Es ist möglich, die von der Datenverarbeitungseinrichtung 13 durchgeführten Korrekturen, in Abhängigkeit von der Art des zu korrigierenden Fehlers, vor jedem Lesedurchgang oder in größeren Zeitabständen durchzuführen.

Aufgrund der erfindungsgemäßen Anregung mehrerer Punkte der Phosphorplatte 15, insbesondere aller Punkte einer der Zeilen der Phosphorplatte 15, ist es möglich, eine Verweilzeit von etwa 1 ms der ersten Strahlung pro Punkt des Phosphorträgers 15 vorzusehen. Die von einer Laserdiode aufzubringende Leistung kann dann bei etwa einem Milliwatt liegen.

Die Größe einer Zeile der Phosphorplatte 15 und die Größe ihrer anregbaren Punkte werden durch den Querschnitt des die einzelnen Punkte der Phosphorplatte 15 anregenden Laserdiodenstrahls und die Größe der lichtempfangenden Fläche der einzelnen Fotodetektoren bestimmt.

Im Betrieb sendet die Laserdiodenzeile 11 zum Anregen der Punkte einer Zeile der Phosporplatte 15 eine erste Strahlung 16 aus, die aufgrund der Zusammensetzung der Laserdiodenzeile 11 aus 4096 Laserdioden aus 4096 einzelnen Laserdiodenstrahlen besteht. Mit diesen 4096 einzelnen Laserdiodenstrahlen können daher in einer Zeile der Phosphorplatte 15 4096 einzelne Punkte zum Strahlen angeregt werden. Die Laserdioden der Laserdiodenzeile 11 haben einen Mittenabstand von etwa 80 µm. Da der Abstand zwischen der Laserdiodenzeile 11 und der Phosphorplatte 15 sehr klein (vorteilhafterweise < 0,5mm) ist, ist eine Optik zur Fokussierung der Laserdiodenstrahlen nicht notwendig. Die Aufweitung der einzelnen Laserdiodenstrahlen ist so gering, daß benachbarte Punkte auf der Phosphorplatte 15 im großen und ganzen nicht angeregt werden. Der Mittenabstand zweier Laserdioden in der Laserdiodenzeile 11 entspricht daher im wesentlichen dem Abstand zweier angeregter Punkte auf der Phosphorplatte 15.

Die aufgrund der ersten Strahlung 16 angeregten Punkte der Phosphorplatte 15 senden eine zweite Strahlung 17 aus, die von den Selfoc-Linsen der Selfoc-Linsenzeile 14 auf die einzelnen Fotodetektoren der CCD-Zeile 12 abgebildet wird. In bekannter Weise führt die CCD-Zeile 12 die fotoelektrische Wandlung des empfangenen und von der Phosphorplatte 15 emittierten Lichts durch und leitet die erzeugten elektrischen Signale, die das Abbild der in der Phosphorplatte 15 abgespeicherten Bildinformation enthalten, an die Datenverarbeitungseinrichtung 13 zur Aufbereitung weiter.

Durch das Anregen aller Punkte einer der Zeilen der Phosphorplatte 15 reduziert sich die Bandbreite B und damit die Rauschleistung P. Diese ist proportional der Bandbreite B gemäß der folgenden Gleichung:

$$P = 4 * k * T * B,$$

wobei T=Absolute Temperatur und k=Boltzmann-Konstante.

Figur 2 zeigt eine weitere Ansicht des erfindungsgemäßen Lesekopfs 10 gemäß dem ersten Ausführungsbeispiel. Die Figur 2 zeigt eine Draufsicht auf den erfindungsgemäßen Lesekopf und die Phosphorplatte 15. Der Lesekopf 10 ist in einer Schnittdarstellung gezeigt. Der Lesekopf 10 überspannt die gesamte Breite der Phosphorplatte 15, in der Informationen abgespeichert sein können. Die Figur 2 zeigt schematisch die Laserdiodenzeile 11 mit parallel nebeneinander angeordneten Laserdioden LD1 bis LDn. Ebenfalls abgebildet ist die CCD-Zeile 12 mit parallel nebeneinander angeordneten Fotodetektoren PD1 bis PDn. In diesem Ausführungsbeispiel enthält die Laserdiodenzeile 11 4096 Laserdioden und die CCD-Zeile 12 4096 einzelne Fotodetektoren, so daß n = 4096 ist. Der Lesekopf 10 ist in eine Vorschubrichtung A hin- und herbewegbar. Auf diese Weise können die Zeilen der Phosphorplatte 15 nacheinander abgetastet und die in den verschiedenen Zeilen der Phosphorplatte 15 abgespeicherte Bildinformation ausgelesen werden. Es ist auch möglich, anstelle des Lesekopfs 10 die Phosphorplatte 15 in Richtung der Vorschubrichtung A hin und herbewegbar auszugestalten.

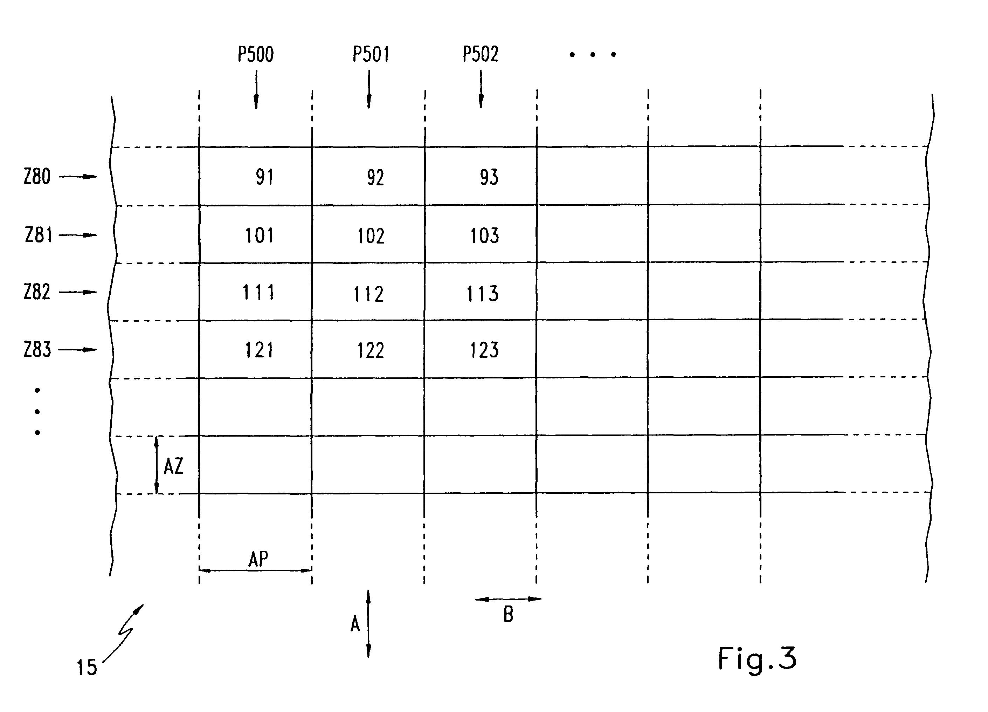

Figur 3 zeigt ein Beispiel einer schematische Darstellung einer Einteilung der Phosphorplatte 15 nach Zeilen und Punkten dieser Zeilen, wie sie aufgrund der Ausgestaltung der Größen der anregenden Laserdiodenstrahlen und der lichtempfangenden Flächen der Fotodetektoren der CCD-Zeile 12 vorgegeben wird. Eine Zeilenlänge AZ gibt die Länge einer Zeile der Phosphorplatte 15 in die Vorschubrichtung A des Lesekopfes 10 an. Diese Länge AZ wird hier durch den Querschnitt des anregenden Laserdiodenstrahls bestimmt. Die Länge AZ der Zeilen beträgt hier etwa 20μm. Diese Zeilenlänge AZ gibt gleichzeitig die Länge eines der Punkte der Zeile vor. Eine Punktbreite AP gibt die Breite eines Punkts der Zeile in Zeilenrichtung B an. Diese Breite AP wird hier durch die lichtempfangende Fläche eines der Fotodetektoren der CCD-Zeile 12 vorgegeben. Sie beträgt hier etwa 80μm.

Stellvertretend für die Zeilen der Phosphorplatte 15 sind in der Figur 3 vier aufeinanderfolgende Zeilen Z80, Z81, Z82 und Z83 abgebildet. Die erste Zeile Z80 enthält u. a. drei Punkte 91, 92 und 93. Die zweite Zeile Z81 enthält u. a. drei Punkte 101, 102 und 103. Die dritte Zeile Z82 enthält u. a. drei Punkte 111, 112 und 103 und die vierte Zeile Z83 u. a. drei Punkte 121, 122 und 123. Die Punkte der Zeilen sind untereinander angeordnet, so daß sich verschiedene Reihen P500, P501 und P502 von Punkten bilden, die alle unterschiedlichen Zeilen zugeordnet sind. Im Beispiel gemäß der Figur 3 sind die Punkte 91, 101, 111 und 121 in der ersten Reihe P500, die Punkte 92, 102, 112 und 122 in der zweiten Reihe P501 sowie die Punkte 93, 103, 113 und 123 in der dritten Reihe P502 enthalten. Die Punkte, die in einer der Reihen untereinander angeordnet sind und jeweils zu verschiedenen Zeilen gehören, werden hier als dieselben Punkte der verschiedenen Zeilen bezeichnet.

Zur Verbesserung des Signal-Rausch-Verhältnisses können die Intensitäten der zweiten Strahlung, die von mehreren, untereinander in einer Reihe liegenden Punkten mehrerer benachbarter Zeilen nach deren Anregen von der Datenverarbeitungseinrichtung 13 aufintegriert, d.h. zusammengefaßt, werden. Anschließend wird aus diesen aufintegrierten Intensitäten der Mittelwert bestimmt. Dieser Mittelwert bestimmt nun die Wiedergabe der so zusammengefaßten Punkte der Reihe. im vorliegenden Ausführungsbeispiel werden jeweils die in den verschiedenen Reihen untereinanderliegenden Punkte der vier Zeilen Z80, Z81, Z82 und Z83 zusammengefaßt. Das bedeutet, daß die empfangenen Strahlungsintensitäten der Punkte 91, 101, 111 und 121 der ersten Reihe P500, diejenigen der Punkte 92, 102, 112 und 122 der zweiten Reihe P501, diejenigen der Punkte 93, 103, 113 und 123 der dritten Reihe P502, usw., zusammengefaßt und einer anschließenden Mittelwertbildung unterworfen werden. Auf diese Weise werden daher dieselben Punkte mit jeweils einer Länge von 20μm von vier Zeilen zu einem "großen" Punkt zusammengefaßt, der dann eine Länge in Vorschubrichtung A von etwa 80μm aufweist. Als Nachteil wird dabei in Kauf genommen, daß die Auflösung bei der Wiedergabe der abgespeicherten Bildinformation sinkt. Allerdings können so die Auswirkungen von Rauschquellen, wie beispielsweise dem Röntgenstrahlrauschen beim Beschreiben der Phosphorplatte, dem Lichtphotonenrauschen beim Auslesen der Phosphorplatte oder das Phosphorplattenrauschen, reduziert werden.

Anstelle einer Laserdiodenzeile, die über die gesamte Breite der Phosphorplatte 15 verläuft, ist es ebenso möglich, eine Strahlungsquelle mit Laserdioden zu verwenden, die nur einen Teil einer Zeile Phosphorplatte 15 zum Leuchten anregen. Zum Auslesen der in der gesamten Zeile der Phosphorplatte 15 abgespeicherten Bildinformation ist es dann allerdings notwendig, diese Strahlungsquelle in Ausbreitungsrichtung B der Zeile zu verschieben.

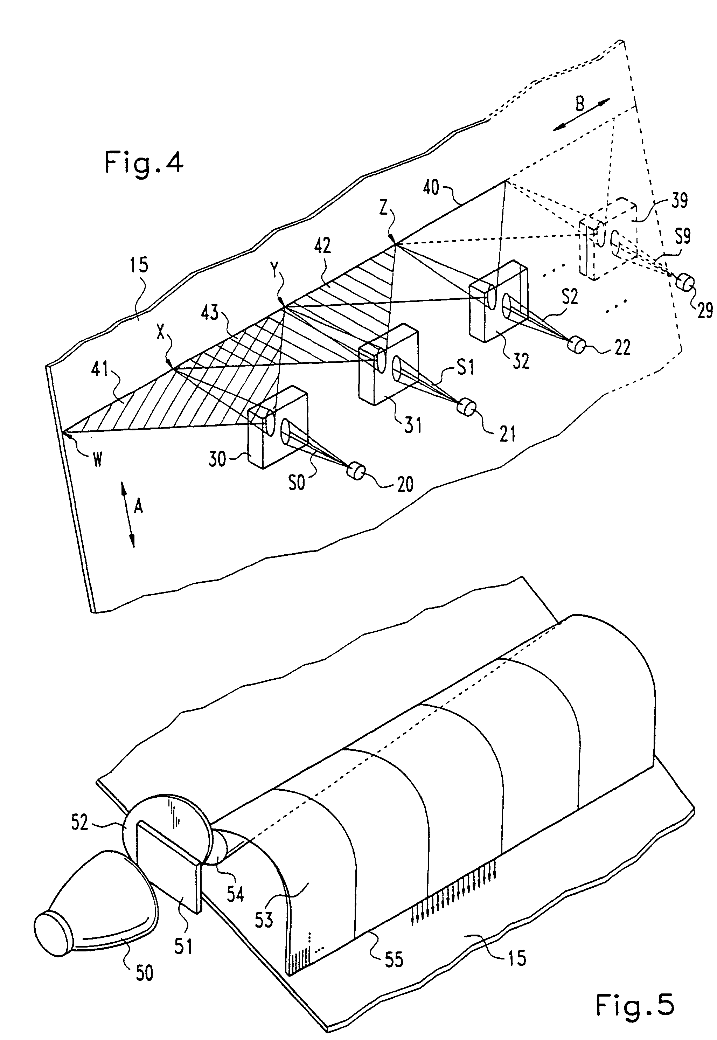

Figur 4 zeigt ein zweites Ausführungsbeispiel der erfindungsgemäßen Vorrichtung. Diese weist hier eine Vielzahl von Laserdioden 20 bis 29 auf, deren Laserdiodenstrahlen S0 bis S9 über Abbildungsoptiken 30 bis 39 auf der Phosphorplatte 15 abgebildet werden. Dabei ist jeweils eine der Abbildungsoptiken einer der Laserdioden zugeordnet. Die Abbildungsoptiken können beispielsweise einfachheitshalber mittels Zylinderlinsen realisiert sein. In diesem Ausführungsbeispiel wird jede Laserdiode 20 bis 29 für das Anregen mehrerer Punkte der Phosphorplatte verwendet. Die der jeweiligen Laserdiode 20 bis 29 zugeordnete Abbildungsoptik 30 bis 39 weitet dazu den jeweiligen Laserdiodenstrahl S1 bis S9 in Ausbreitungsrichtung B der anzuregenden Zeile auf. Die Figur 4 zeigt eine durch die aufgeweiteten Laserdiodenstrahlen S0 bis S9 angeregte Zeile 40. Darüber hinaus zeigt die Figur 4 stellvertretend für die Strahlenfelder aller Laserdioden 20 bis 29 ein erstes Strahlenfeld 41, das von der ersten Laserdiode 20 mittels der dieser ersten Laserdiode 20 zugeordneten Abbildungsoptik 30 erzeugt wird. Dazu weitet die Abbildungsoptik 30 den Laserdiodenstrahl S1 der Laserdiode 20 in Ausbreitungsrichtung B der Zeile 40 auf. Eine Grenze des ersten Strahlenfeldes 41 verläuft daher auf der Zeile 40 von einem ersten Punkt W bis zu einem dritten Punkt Y. Der durch die Abbildungsoptik 30 aufgeweitete Laserdiodenstrahl S0 der Laserdiode 20 wird durch diese Abbildungsoptik 30 ebenfalls in die Richtung A, die senkrecht zu der Ausbreitungsrichtung B der Zeile verläuft und der Vorschubrichtung des erfindungsgemäßen Lesekopfes zum Abtasten der Phosphorplatte 15 entspricht, fokussiert. Es ist daher gewährleistet, daß durch das erste Strahlenfeld 41 ausschließlich Punkte auf der anzuregenden Zeile 40 zum Leuchten angeregt werden. Diese Punkte liegen zwischen dem ersten Punkt W und dem dritten Punkt Y.

Die Figur 4 zeigt ebenfalls stellvertretend ein zweites Strahlenfeld 42, das von einer zweiten Abbildungsoptik 31 durch Aufbereitung und Fokussierung eines weiteren Laserdiodenstrahles S1, der von einer weiteren Laserdiode 21 stammt, erzeugt wird. Dieser weitere Laserdiodenstrahl S1 wird durch die Abbildungsoptik 31 ebenfalls in Ausbreitungsrichtung B der Zeile 40 aufgeweitet und in Vorschubrichtung A des Lesekopfes fokussiert. Das zweite Strahlenfeld 42 regt daher diejenigen Punkte der Zeile 40 an, die zwischen einem zweiten Punkt X und einem vierten Punkt Z liegen. Der zweite Punkt X liegt dabei genau in der Mitte des ersten Punktes W und des dritten Punktes Y.

Durch diese Anordnung ergibt sich ein Überlagerungsfeld 43, in dem sich das erste Strahlenfeld 41 und das zweite Strahlenfeld 42 überlagern. Die Intensität des Überlagerungsfeldes 43 ist daher in etwa doppelt so groß wie die Einzelintensitäten des ersten und zweiten Strahlenfeldes 41 bzw. 42.

Durch die gleichmäßige Anordnung der einzelnen Laserdioden 20 bis 29 und der ihnen zugeordneten Abbildungsoptiken 30 bis 39 ist gewährleistet, daß jeder anzuregende Punkt der Zeile 40 durch die aufgeweiteten und fokussierten Laserdiodenstrahlen zweier Laserdioden angeregt wird. Auf diese Weise ist es vorteilhafterweise möglich, die Funktionssicherheit dieser Strahlungsquelle zu erhöhen, da auch bei Ausfall einer der Laserdioden 20 bis 29 das Anregen aller Punkte der anzuregenden Zeile 40 gewährleistet ist. Die Intensität der anregenden Strahlung wird bei Ausfall einer der Laserdioden 20 bis 29 in dem jeweiligen ausfallenden Bereich geringer, allerdings kann dieser Ausfall detektiert werden, so daß die Datenverarbeitungseinrichtung, die die Verarbeitung der digitalen Bilddaten nach dem Wandeln des von dem Empfangsmittel detektierten Lichts in elektrische Signale vornimmt, die durch den Ausfall fehlerhaften digitalen Bilddaten korrigieren kann.

Alternativ zu dem Ausführungsbeispiel der Figur 4 ist es auch möglich, mehr als zwei Laserdiodenstrahlen auf jeweils einem Punkte der anzuregenden Zeile zu überlagern. Dadurch kann die Ausfallsicherheit noch weiter erhöht werden. Des weiteren kann die Anzahl der Laserdioden der Strahlungsquelle verändert werden. Sie ist nicht auf die in diesem Ausführungsbeispiel beschriebene Anzahl von zehn Laserdioden beschränkt.

Figur 5 zeigt ein drittes Ausführungsbeispiel der erfindungsgemäßen Vorrichtung. Bei diesem dritten Ausführungsbeispiel weist die Strahlungsquelle eine thermische Lichtquelle in Form einer Halogenlampe 50 auf. Es ist allerdings ebenso möglich, eine Gasentladungslampe oder eine andere Lichtquelle mit einer spontanen Emission des Lichts zu verwenden. Das Licht der Halogenlampe 50 wird über ein Filter 51, das eine geeignete Anpassung des für das Anregen der Phosphorplatte 15 verwendeten Wellenlängenbereichs vornimmt, in einen Faserquerschnittswandler 53 eingekoppelt. Dazu ist eine dünne Glasfaser einlagig gewickelt und an ihrem einen Ende 54 rund gebündelt. Die Austrittsfläche an dem anderen Ende 55 des Querschnittswandlers 53 wird vorteilhafterweise über eine geeignete Optik in die Abbildungsebene auf der anzuregenden Zeile der Phosphorplatte 15 abgebildet oder dicht über diese anzuregenden Zeile angeordnet.

Zwischen dem Eingang des Querschnittswandlers 53 und dem Filter 51 ist ein Verschluß 52 vorgesehen, mit dem die Zeit des Einkoppelns von Licht in den Faserquerschnittswandler 53 schnell und direkt gesteuert werden kann.

Aufgrund der Verwendung der Halogenlampe 50 kann vorteilhafterweise eine hohe Lichtleistung erzielt werden. Des weiteren kann diese Halogenlampe 50 ebenfalls für ein Löschen der zuvor mit der Röntgenstrahlung beschriebenen Phosporplatte 15 verwendet werden.

Statt der Verwendung einer thermischen Lichtquelle, wie beispielsweise der Halogenlampe gemäß des dritten Ausführungsbeispiels, oder der Verwendung von Laserdioden gemäß dem ersten und zweiten Ausführungsbeispiel, kann ebenso eine Drahtlampe als Strahlungsquelle verwendet werden, deren Draht als strahlenemittierende Fläche verwendet wird. Mittels einer geeigneten spektralen Filterung kann die emittierende Fläche dieses Drahtes ohne weitere optische Umformung in die ebene Phosphorplatte abgebildet werden. Dadurch kann ein sehr kompakter Aufbau erzielt werden. Die Drahtlampe muß allerdings bezüglich ihrer Abstrahlungseigenschaften den Anforderungen betreffend die Linienbreite, die Länge und die Gleichmäßigkeit des Bereichs der Phosphorplatte mit den anzuregenden Punkten gerecht werden.

Im übrigen ist es ebenfalls möglich, als Strahlungsquelle sogenannte Leuchtdioden (LED) zu verwenden, falls diese eine genügend hohe Abstrahlintensität erreichen. LEDs können vorteilhafterweise ebenfalls in Zeilenform verwendet werden.

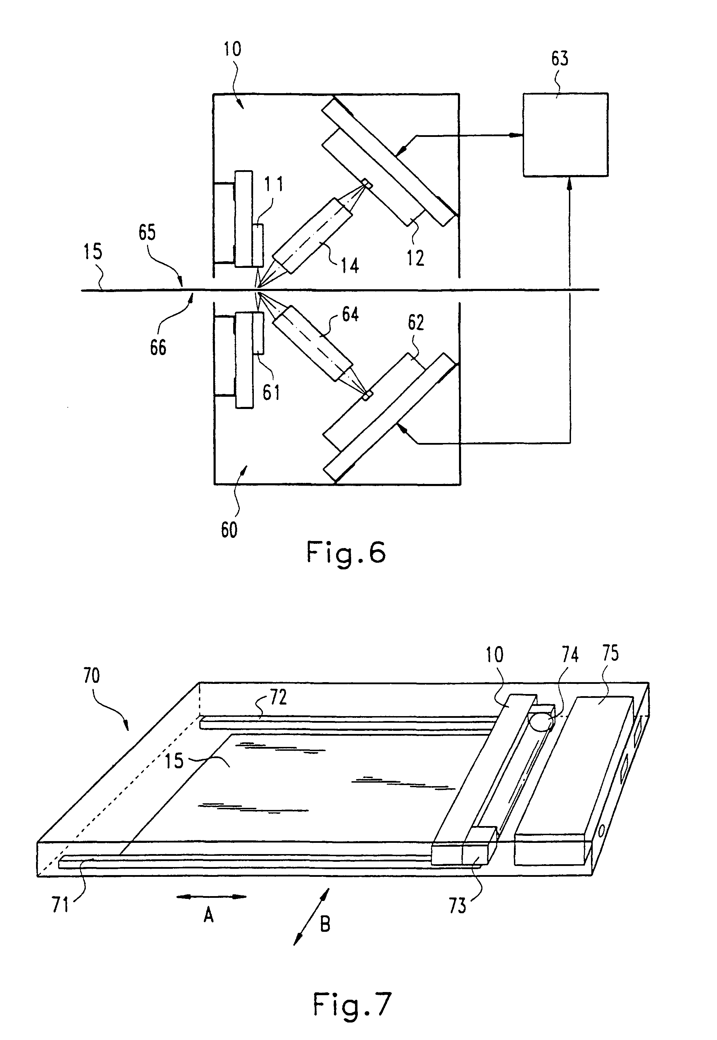

Figur 6 zeigt ein viertes Ausführungsbeispiel der erfindungsgemäßen Vorrichtung. In diesem Ausführungsbeispiel ist die Phosphorplatte 15 auf ihrer Oberseite 65 mit einer ersten Beschichtung versehen, die sich von einer zweiten Beschichtung, die auf der Unterseite 66 der Phosphorplatte 15 aufgetragen ist, unterscheidet. Die Beschichtungen der Oberseite 65 und der Unterseite 66 der Phosphorplatte 15 haben voneinander unterschiedliche Empfindlichkeiten. Dadurch können geröntgte Objekte, die voneinander stark verschiedene Kontrastunterschiede aufweisen, wie beispielsweise Knochen oder Weichteile, mit der gleichen Phosphorplatte mit sehr guter Qualität wiedergegeben werden.

Die erfindungsgemäße Vorrichtung gemäß der Figur 6 weist zum Lesen der Phosphorplatte 15 zwei Leseköpfe 10 und 60 auf. Die beiden Leseköpfe 10 und 60 entsprechen in ihrem Aufbau demjenigen des Lesekopf 10, wie er bereits oben anhand des ersten Ausführungsbeispiels gemäß der Figur 1 und 2 beschrieben wurde. Die Leseköpfe 10 und 60 weisen daher beide jeweils eine Laserdiodenzeile 11 bzw. 61 zum Anregen der Punkte der Phosphorplatte 15 auf. Darüber hinaus enthalten sie jeweils eine CCD-Zeile 12 bzw. 62 zum Empfangen der von den angeregten Punkten der Phosphorplatte 15 emittierten Strahlung, die von einer Selfoc-Linsenzeile 14 bzw. 64 auf den dazugehörigen CCD-Zeilen 12 bzw. 62 abgebildet wird. Die von den beiden CCD-Zeilen 12 bzw. 62 erzeugten elektrischen Signale, die ein Abbild der in der Röntgenplatte 15 abgespeicherten Bildinformation enthalten, werden einer gemeinsamen Datenverarbeitungseinrichtung 63 zugeleitet. Diese Datenverarbeitungseinrichtung 63 steuert die Funktionsweise der beiden Leseköpfe 10 und 60. Sie kann beispielsweise vorgeben, ob einer der beiden Leseköpfe 10 bzw. 60 oder beide zusammen die in der Phosphorplatte 15 enthaltene Bildinformation auslesen sollen. Die von den beiden CCD-Zeilen 12 und 62 übermittelten elektrischen Signale werden in der Datenverarbeitungseinrichtung 63 zu einem Gesamtbild zusammengefügt. Dabei können die beiden Signale unterschiedlich gewichtet werden.

Durch das mögliche beidseitige Auslesen der Phosphorplatte 15 kann eine weitere Verbesserung bei der Wiedergabe der ausgelesenen Bildinformation erzielt werden. Dies insbesondere deshalb, da mehr in der Phosphorplatte abgespeicherte Information ausgelesen werden kann. Dabei können vorteilhafterweise die Streuungen der Anregungsstrahlungen, die beim Eindringen der Anregungsstrahlungen in die beidseitig beschichtete Phosphorplatte 15 entstehen, im Vergleich zu einem einzigen Lesekopf, der an einer der Seiten der Phosphorplatte 15 angebracht ist und der Bildinformationen aus der beidseitig beschichteten Phosphorplatte ausliest, gering gehalten werden. Dadurch kann die Verunschärfung der ausgelesenen Bildinformation aufgrund von Streustrahlung wesentlich reduziert werden.

Anstelle der beiden Laserdiodenzeilen 11 und 61 können auch die zuvor beschriebenen anderen Strahlungsquellen zum Anregen der einzelnen Punkte der Phosphorplatte 15 verwendet werden.

Figur 7 zeigt ein Ausführungsbeispiel einer erfindungsgemäßen Röntgenkassette 70, die eine erfindungsgemäße Vorrichtung zum Auslesen von einer in einem Phosphorträger abgespeicherten Information aufweist. Eine solche erfindungsgemäße Vorrichtung ist im vorliegenden Ausführungsbeispiel der Lesekopf 10, der bereits zuvor anhand des ersten Ausführungsbeispiels unter Figuren 1 und 2 beschrieben wurde. Die erfindungsgemäße Röntgenkassette 70 weist darüber hinaus die Phosphorplatte 15 auf, in der die Information abgespeichert werden kann, die von dem Lesekopf 10 ausgelesen werden soll. Entlang der beiden Längsseiten der Phosphorplatte 15 sind Führungsstäbe 71 und 72 angebracht, die dem Antrieb und der Führung des Lesekopfes 10 dienen. Der Lesekopf 10 kann vorteilhafterweise von einem Linearmotor 73 angetrieben werden, so daß er entlang seiner Vorschubrichtung A zeilenweise über die Phosphorplatte 15 geführt werden kann. Für die exakte Steuerung des Antriebs des Linearmotors 73 ist in der Röntgenkassette eine Steuereinrichtung 75 vorgesehen. Die beiden Führungsstäbe 71 und 72 dienen hier als Reaktionsteile für den Linearmotor 73. Aufgrund der Verwendung des Linearmotors 73 für den Antrieb des Lesekopfes 10 kann auf eine aufwendige, Ungenauigkeiten erzeugende Kraftübertragung von einem herkömmlichen Elektromotor mit rotierender Welle auf den Lesekopf 10 verzichtet werden.

Längs hinter dem Lesekopf 10 ist eine Löschlampe 74 angebracht, die ebenfalls von dem Linearmotor 73 über die Phosphorplatte 15 geführt werden kann, um eine darin abgespeicherte Bildinformation zu löschen. Vorteilhafterweise werden der Lesekopf 10 und die Löschlampe 74 von dem gleichen Linearmotor 73 über die Phosphorplatte 15 bewegt.

Eine solche erfindungsgemäße Röntgenkassette kann direkt in einen Röntgentisch eingeschoben werden, so daß ein Herausnehmen der Röntgenkassette zum Auslesen der darin abgespeicherten Bildinformation nicht notwendig ist. Die Röntgenkassette 70 weist Schnittstellen auf, über die die von dem Lesekopf 10 erzeugten digitalen Daten an einen Monitor oder einen Printer weitergegeben werden können.

Aufgrund der erfindungsgemäßen Ausgestaltung der Vorrichtung zum Auslesen der in einem Phosphorträger abgespeicherten Informationen kann die Röntgenkassette mit sehr geringen Ausmaßen gefertigt werden. Es ist möglich, die Dicke der Röntgenkassette auf ca. 45 mm zu begrenzen, so daß sie dadurch auch in bereits im Betrieb befindliche, herkömmliche Röntgengeräte einschiebbar ist.


## Patentansprüche

1. Vorrichtung (10, 60) zum zeilenweisen Auslesen von einer in einem Phosphorträger (15) abgespeicherten Information mit einer Strahlungsquelle (11; 20,...,29, 30,...39; 50, 53; 61), mit welcher mehrere Einzelstrahlen (S0,...,S9) erzeugbar sind, zum Aussenden von einer ersten Strahlung (16), mit der der Phosphorträger (15) so anregbar ist, daß er eine zweite Strahlung (17) aussendet, die ein zumindest teilweises Abbild der abgespeicherten Information beinhaltet, und einem Empfangsmittel (12, 62) zum punktweisen Empfangen der von dem Phosphorträger (15) ausgesandten zweiten Strahlung (17), wobei das Empfangsmittel (12, 62) eine Vielzahl von Punktelementen (PD1,...,PDn) aufweist und durch mehrere dieser Punktelemente (PD1,...,PDn) die von dem Phosphorträger (15) ausgesandte zweite Strahlung (17) gleichzeitig empfangbar ist, **dadurch gekennzeichnet, daß** die Strahlungsquelle eine Optik (30,...,39) zum Aufweiten der mehreren Einzelstrahlen (S0,...,S9) in Ausbreitungsrichtung (B) einer Zeile (40) des Phosphorträgers (15) aufweist, wobei sich mindestens zwei der Einzelstrahlen (S0,...,S9) zumindest teilweise auf anzuregenden Punkten des Phosphorträgers (15) überlagern.

2. Vorrichtung nach Anspruch 1, **dadurch gekennzeichnet, daß** die Strahlungsquelle eine Lichtquelle (50) mit einer spontanen Emission des Lichts, insbesondere eine Halogenlampe oder eine Gasentladungslampe, und einen Faserquerschnittswandler (53) aufweist.

3. Vorrichtung nach einem der Ansprüche 1 oder 2, **dadurch gekennzeichnet, daß** die Optik (30,...,39) so ausgestaltet ist, daß die Einzelstrahlen (S0,..., S9) in eine Richtung (A) senkrecht zur Ausbreitungsrichtung (B) der Zeile (40) fokussierbar sind.

4. Vorrichtung nach einem der Ansprüche 1-3, **dadurch gekennzeichnet, daß** zwischen dem Phosphorträger (15) und dem Empfangsmittel (12, 62) ein Abbildungsmittel (14, 64) angeordnet ist, mit dem die von den einzelnen Punkten des Phosphorträgers (15) ausgesandte zweite Strahlung (17) 1:1 auf den einzelnen Punktelementen (PD1,...,PDn) abbildbar ist.

5. Vorrichtung nach einem der Ansprüche 1-4, **dadurch gekennzeichnet, daß** sie zwei Strahlungsquellen (11, 61) und zwei Empfangsmittel (12, 62) aufweist, die so angeordnet sind, daß die in dem Phosphorträger, der als Phosphorplatte (15) mit einer Oberseite (65) und einer Unterseite (66) ausgestaltet ist, abgespeicherte Information sowohl über die Ober- als auch über die Unterseite der Phosphorplatte auslesbar ist.

6. Vorrichtung nach einem der Ansprüche 1-5, **dadurch gekennzeichnet, daß** sie ein Auswertemittel (13, 63) zur Auswertung der von dem Empfangsmittel (12, 62) punktweise empfangenen zweiten Strahlung (17) aufweist, wobei dieses Auswertemittel (13, 63) so ausgestaltet ist, daß Intensitäten der punktweise empfangenen zweiten Strahlung (17) von denselben Punkten (91,101,111,121; 92, 102,112,112,122; 93,103,113,123) mehrerer benachbarter Zeilen (Z80,...,Z83), die ausgelesen wurden, zusammenfaßbar und einer Mittelwertbildung unterziehbar sind.

7. Röntgenkassette (70) zum Beschreiben eines darin enthaltenen Phosphorträgers (15), **dadurch gekennzeichnet, daß** die Röntgenkassette (70) zum zeilenweisen Auslesen einer in dem Phosphorträger (15) abgespeicherten Information eine Strahlungsquelle (11; 20,...,29, 30,...39; 50, 53; 61) zum Aussenden einer ersten Strahlung (16), mit der der Phosphorträger (15) so anregbar ist, daß er eine zweite Strahlung (17) aussendet, die ein zumindest teilweises Abbild der abgespeicherten Information beinhaltet, und ein Empfangsmittel (12, 62) zum punktweisen Empfangen der von dem Phosphorträger (15) ausgesandten zweiten Strahlung (17) aufweist, wobei das Empfangsmittel (12, 62) eine Vielzahl von Punktelementen (PD1,...,PDn) enthält und durch mehrere dieser Punktelemente (PD1,...,PDn) die von dem Phosphorträger (15) ausgesandte zweite Strahlung (17) gleichzeitig empfangbar ist.

8. Röntgenkassette nach Anspruch 7, **dadurch gekennzeichnet, daß** der Phosphorträger als Phosphorplatte (15) ausgestaltet ist, die eine Oberseite (65) und eine Unterseite (66) aufweist, wobei die Oberseite eine von der Unterseite unterschiedliche Beschichtung hat.

9. Röntgenkassette nach Anspruch 7 oder 8, **dadurch gekennzeichnet, daß** sie einen Linearantrieb (73), insbesondere einen elektrischen Linearmotor, zum Bewegen der Strahlungsquelle (11; 20,...,29, 30,... 39; 50, 53; 61) und des Empfangsmittels (12, 62) über den Phosphorträger (15) aufweist.

10. Röntgenkassette nach Anspruch 9, **dadurch gekennzeichnet, daß** sie ein Löschmittel (74) zum Löschen der in dem Phosphorträger (15) abgespeicherten Information aufweist, und das Löschmittel (74) so angeordnet ist, daß es von dem Linearantrieb (73) über den Phosphorträger (15) bewegbar ist.

**Claims**

1. Device (10, 60) for the line-by-line readout of information stored in a phosphorus support (15) with a radiation source (11; 20, ..., 29, 30, ..., 39; 50, 53; 61) that can generate a plurality of individual beams (S0, ..., S9), for emitting primary radiation (16) that can stimulate the phosphorus support (15) such that it emits secondary radiation (17) that contains at least a partial image of the stored information, and a receiving device (12, 62) for point-by-point reception of the secondary radiation (17) emitted by the phosphorus support (15), wherein the receiving device (12, 62) includes a multitude of point elements (PD1, ..., PDn) and the secondary radiation (17) that is emitted by the phosphorus support (15) can be received at the same time by a plurality of these point elements (PD1, ..., PDn), **characterised in that** the radiation source, includes an optical device (30, ..., 39) for expanding the plurality of individual beams (S0, ..., S9) in the direction of propagation (B) of a line (40) on the phosphorus support (15), wherein at least two of the individual beams (S0, ..., S9) are at least in part superimposed at points of the phosphorus support (15) to be stimulated.

2. The device according to claim 1, **characterised in that** the radiation source includes a light source (50) with spontaneous light emission, in particular a halogen lamp or a gas discharge lamp, and a fibre cross-section converter (53).

3. The device according to either of claims 1 or 2, **characterised in that** the optical device (30, ..., 39) is so constructed that the individual beams (S0, ..., S9) may be focused in a direction (A) perpendicular to the direction (B) of propagation of a line (40).

4. The device according to any of claims 1 to 3, **characterised in that** an imaging means (14, 64) is located between the phosphorus support (15) and the receiving device (12, 62), for imaging the secondary radiation (17) emitted by the individual points of the phosphorus support (15) in a ratio of 1:1 on the individual point elements (PD1, ..., PDn).

5. The device according to any of claims 1 to 4, **characterised in that** it includes two radiation sources (11, 61) and two receiving devices (12, 62) that are arranged such that the information stored in the phosphorus support (15), which is constructed as a phosphorus plate (15) having an upper side (65) and a lower side (66), can be read out both from the upper side and from the lower side of the phosphorus plate.

6. The device according to any of claims 1 to 5, **characterised in that** it includes an evaluation means (13, 63) for evaluating the secondary radiation (17) that is received point-by-point by the receiving device (12, 62), wherein said evaluation means (13, 63) is so constructed that intensities of the secondary radiation (17) from the same points (91, 101, 111, 121; 92, 102, 112, 112, 122; 93, 103, 113, 123) of a plurality of adjacent lines that have been read out and received point-by-point may be combined and averaged.

7. An X-ray cassette (70) for writing a phosphorus support (15) contained therein, **characterised in that** the X-ray cassette (70) includes a radiation source (11; 20, ..., 29, 30, ..., 39; 50, 53; 61) for emitting primary radiation (16) that can be used to stimulate the phosphorus support (15) such that it emits secondary radiation (17) for line-by-line read out of information stored in the phosphorus support (15), said secondary radiation (17) containing at least a partial image of the stored information, and a receiving device (12, 62) for point-by-point reception of the secondary radiation (17) emitted by the phosphorus support (15), wherein the receiving device (12, 62) contains a multitude of point elements (PD1, ..., PDn) and the secondary radiation (17) emitted by the phosphorus support (15) can be received by a plurality of these point elements (PD1, ..., PDn) at the same time.

8. The X-ray cassette according to claim 7, **characterised in that** the phosphorus support is constructed as a phosphorus plate (15) having an upper side (65) and a lower side (66), wherein the upper side has a coating that is different from that on the lower side.

9. The X-ray cassette according to claim 7 or 8, **characterised in that** it includes a linear drive (73), in particular an electric linear motor, for moving the radiation source (11; 20, ..., 29, 30, ..., 39; 50, 53; 61) and the receiving device (12, 62) across the phosphorus support (15).

10. The X-ray cassette according to claim 9, **characterised in that** it includes an erasing device (74) for erasing the information stored in the phosphorus support (15), and the erasing device is arranged such that it can be moved across the phosphorus support (15) by the linear drive (73).

**Revendications**

1. Dispositif (10, 60) de lecture ligne par ligne d'une information mémorisée sur un support au phosphore (15), comportant une source de rayonnement (11 ; 20 à 29, 30 à 39 ; 50, 53 ; 61) avec laquelle plusieurs rayons individuels (S0 à S9) peuvent être produits et qui sert à émettre un premier rayonnement (16) avec lequel le support au phosphore (15) peut être excité de telle sorte qu'il émette un second rayonnement (17) contenant une reproduction au moins partielle de l'information mémorisée ; ainsi qu'un moyen de réception (12, 62) qui sert à recevoir point par point le second rayonnement (17) émis par le support au phosphore (15), le moyen de réception (12, 62) comportant une pluralité d'éléments ponctuels (PD1 à PDn) et le second rayonnement (17) émis par le support au phosphore (15) pouvant être reçu en même temps par plusieurs de ces éléments ponctuels (PD1 à PDn), **caractérisé en ce que** la source de rayonnement comporte une optique (30 à 39) qui sert à élargir les divers rayons individuels (S0 à S9) dans la direction d'extension (B) d'une ligne (40) du support au phosphore (15), au moins deux des rayons individuels (S0 à S9) se superposant au moins partiellement sur des points à exciter du support au phosphore (15).

2. Dispositif selon la revendication 1, **caractérisé en ce que** la source de rayonnement comporte une source lumineuse (50) à émission spontanée de lumière, notamment une lampe halogène ou une lampe luminescente à gaz, et un convertisseur de section à fibres (53).

3. Dispositif selon l'une des revendications 1 ou 2, **caractérisé en ce que** l'optique (30 à 39) est agencée de telle manière que les rayons individuels (S0 à S9) puissent être focalisés dans une direction (A), perpendiculairement à la direction d'extension (B) de la ligne (40).

4. Dispositif selon l'une des revendications 1 à 3, **caractérisé en ce qu'**un moyen de reproduction (14, 64) avec lequel le second rayonnement émis (17) par les différents points du support au phosphore (15) peut être représenté sur les différents éléments ponctuels (PD1 à PDn) dans un rapport 1/1 est disposé entre le support au phosphore (15) et le moyen de réception (12, 62).

5. Dispositif selon l'une des revendications 1 à 4, **caractérisé en ce que** ledit dispositif comporte deux sources de rayonnement (11, 61) et deux moyens de réception (12, 62) qui sont disposés de telle manière que l'information mémorisée sur le support au phosphore, lequel est agencé sous forme de plaque au phosphore (15) ayant une face supérieure (65) et une face inférieure (66), puisse être lue aussi bien sur la face supérieure que sur la face inférieure de la plaque au phosphore.

6. Dispositif selon l'une des revendications 1 à 5, **caractérisé en ce que** ledit dispositif comporte un moyen d'exploitation (13, 63) qui sert à exploiter le second rayonnement (17) reçu point par point par le moyen de réception (12, 62), ce moyen d'exploitation (13, 63) étant agencé de telle manière que des intensités du second rayonnement (17) reçu point par point et issu des mêmes points (91, 101, 111, 121 ; 92, 102, 112, 112, 122 ; 93, 103, 113, 123) de plusieurs lignes voisines (Z80 à Z83) qui ont été lues, puissent être réunies et puissent servir à la formation d'une valeur moyenne.

7. Cassette radiographique (70) servant à décrire un support au phosphore (15) qui se trouve à l'intérieur, **caractérisé en ce que**, pour lire ligne par ligne une information mémorisée sur le support au phosphore (15), la cassette radiographique (70) comporte une source de rayonnement (11 ; 20 à 29, 30 à 39 ; 50, 53 ; 61) qui sert à émettre un premier rayonnement (16) avec lequel le support au phosphore (15) peut être excité de telle sorte qu'il émette un second rayonnement (17) qui contient une reproduction au moins partielle de l'information mémorisée ; ainsi qu'un moyen de réception (12, 62) qui sert à recevoir point par point le second rayonnement (17) émis par le support au phosphore (15) ; le moyen de réception (12, 62) contenant une pluralité d'éléments ponctuels (PD1 à PDn) et le second rayonnement (17) émis par le support au phosphore (15) pouvant être reçu en même temps par plusieurs de ces éléments ponctuels (PD1 à PDn).

8. Cassette radiographique selon la revendication 7, **caractérisée en ce que** le support au phosphore est agencé sous forme de plaque au phosphore (15) comportant une face supérieure (65) et une face inférieure (66), la face supérieure ayant un revêtement différent de la face inférieure.

9. Cassette radiographique selon la revendication 7 ou 8, **caractérisée en ce que** ladite cassette radiographique comporte un entraînement linéaire (73), notamment un moteur linéaire électrique, lequel sert à déplacer la source de rayonnement (11 ; 20 à 29, 30 à 39 ; 50, 53 ; 61) et le moyen de réception (12, 62) au-dessus du support au phosphore (15).

10. Cassette radiographique selon la revendication 9, **caractérisée en ce que** ladite cassette radiographique comporte un moyen d'effacement (74) qui sert à effacer l'information mémorisée sur le support au phosphore (15), et **en ce que** le moyen d'effacement (74) est disposé de telle manière qu'il puisse être déplacé par l'entraînement linéaire (73) au-dessus du support au phosphore (15).

Fig.1

Fig.2

Fig.3

P500  P501  P502

91   92   93
101  102  103
111  112  113
121  122  123

Z80  Z81  Z82  Z83

AP  AZ  A  B

15

Fig.4

Fig.5

Fig.6

Fig.7